# FASCICULE DE BREVET EUROPEEN

(11) **EP 1 442 424 B1**
(45) Date de publication et mention de la délivrance du brevet: **25.02.2009**
(21) Numéro de dépôt: 03795045.8
(22) Date de dépôt: 12.09.2003
(51) Int. Cl.: G06K 19/077

(54) **PROCEDE DE FABRICATION D'UNE CARTE A PUCE SANS CONTACT OU HYBRIDE CONTACT-SANS CONTACT A PLANETE RENFORCEE**
VERFAHREN ZUR HERSTELLUNG EINER KONTAKTLOSEN CHIPKARTE ODER EINER HYBRIDEN CHIPKARTE MIT UND OHNE KONTAKTEN MIT VERBESSERTER FLACHHEIT
METHOD OF PRODUCING A CONTACTLESS CHIP CARD OR A CONTACT/CONTACTLESS HYBRID CHIP CARD WITH IMPROVED FLATNESS

(30) Priorité: 13.09.2002 FR 0211387; 25.02.2003 FR 0302258
(43) Date de publication de la demande: 04.08.2004
(73) Titulaire: ASK S.A., 06560 Valbonne (FR)
(72) Inventeur: KAYANAKIS, Georges, F-06600 Antibes (FR); BENATO, Pierre, F-06330 Roquefort les Pins (FR); HALOPE, Christophe, F-06400 Cannes (FR)
(86) Numéro de dépôt international: PCT/FR2003/002701
(87) Numéro de publication internationale: WO 2004/025553

(56) Documents cités:
- WO-A-01/18748
- FR-A- 2 782 821
- US-B1- 6 294 998
- US-B1- 6 441 736

## Description

### Domaine technique

La présente invention concerne les procédés de fabrication des cartes à puce hybride contact - sans contact, et en particulier un procédé de fabrication d'une carte à puce sans contact ou hybride contact - sans contact à planéité renforcée. Un tel procédé a été divulgué dans FR 2782821

### Etat de la technique

La carte à puce sans contact est un système de plus en plus utilisé dans différents secteurs. Ainsi, dans le secteur des transports, elle a été développée comme moyen de paiement. C'est le cas également du porte-monnaie électronique. De nombreuses sociétés ont également développé des moyens d'identification de leur personnel par cartes à puce sans contact.

L'échange d'informations entre une carte hybride contact - sans contact ou une carte sans contact et le dispositif de lecture associé s'effectue par couplage électromagnétique à distance entre une antenne logée dans la carte sans contact et une deuxième antenne située dans le lecteur ou directement par contact avec le lecteur. Pour élaborer, stocker et traiter les informations, la carte est munie d'un module électronique, qui est relié à l'antenne. L'antenne se trouve sur un support situé entre deux corps de cartes dont les faces externes sont imprimées du graphisme lié à l'utilisation ultérieure de la carte. Le support d'antenne est un support diélectrique en matière plastique ou un support en matière fibreuse telle que du papier. Le procédé de fabrication d'une carte hybride contact - sans contact comprend en outre trois grandes étapes :
- réalisation de l'antenne sur un support plastique par gravure chimique du cuivre ou de l'aluminium ou sur un support papier par sérigraphie,
- lamination sous pression à chaud des couches plastiques inférieure et supérieure du corps de carte dont les faces externes sont préalablement imprimées sur le support de l'antenne,
- mise en place et connexion d'un module électronique.

Dans le cas du procédé de fabrication utilisant un support d'antenne en matière fibreuse et une antenne sérigraphiée sur le support d'antenne, les corps de cartes sont constitués de deux ou trois couches de matière plastique dont les deux couches principales sont de point Vicat différent (température à partir de laquelle le PVC passe d'un état rigide à un état caoutchouteux). En effet, la couche externe en PVC rigide a un point Vicat supérieur à celui de la couche interne. La couche interne, de point Vicat inférieur à celui de la couche externe est en contact avec le support de l'antenne.

L'étape de lamination consiste à empiler les différentes couches de PVC constituant les corps de carte et le support d'antenne. Ce sandwich est ensuite placé dans une presse à laminer. Le sandwich subit alors un traitement thermique à une température de l'ordre de 150 °C. En même temps, le sandwich subit un pressage afin de souder les différentes couches. Sous l'action combinée de la chaleur et de la pression, la couche externe de PVC se ramollit, alors que la couche interne constituée d'un PVC de point Vicat plus bas se fluidifie. Le PVC ainsi fluidifié de la couche interne du corps de carte qui vient au contact de l'antenne emprisonne l'encre sérigraphiée de l'antenne dans la masse et le PVC fluidifié des deux couches internes des deux corps de carte rentrent en contact par des découpes de cavité réalisées préalablement dans le support d'antenne.

Le procédé ci-dessus a malheureusement un inconvénient d'ordre esthétique sur le rendu final de la carte. En effet, lors de la fluidification de la couche interne des corps de carte, la couche externe se ramollit et épouse en se déformant de manière atténuée par rapport à la déformation subie par la couche interne de PVC, les reliefs du support d'antenne dus à l'épaisseur de l'antenne et des découpes de cavités.

Ainsi, la carte obtenue après lamination n'est pas parfaitement plane, elle comporte des reliefs. Certes, ces reliefs de l'ordre du micron ne sont pas visibles à l'oeil nu mais ils apparaissent lorsque la face externe de la couche externe du corps de carte est imprimée par des changements de ton dans la teinte du graphisme imprimé. En effet, dans le cas de corps de carte imprimés, lors de l'étape de lamination des corps de carte sur le support d'antenne, la surépaisseur due à l'antenne entraîne un écartement des points d'impression impliquant un éclaircissement de la teinte, de même que les découpes du support d'antenne dans lesquelles le PVC des couches internes des corps de carte vient fluer entraînent un resserrement des points d'impression impliquant un obscurcissement de la teinte. L'aspect extérieur de la carte est dégradé.

Cet inconvénient existe aussi dans le procédé de fabrication des cartes sans contact utilisant un support d'antenne en matière plastique sur lequel l'antenne est réalisée par gravure chimique. En effet, dans un tel procédé, après lamination, l'empreinte des pistes de cuivre est visible sur les corps de carte imprimés de même que la non planéité de la carte, même à l'échelle du micron, apparaît à l'oeil de l'utilisateur par déformations du graphisme.

Sans conséquence pour le bon fonctionnement de la carte, ce défaut d'aspect de la carte finale peut être mis en avant par les utilisateurs très sensibles aux critères esthétiques.

### Exposé de l'invention

Le but de l'invention est de pallier cet inconvénient majeur en réalisant un procédé de fabrication inventif permettant d'obtenir un support d'antenne de cartes à puce sans contact ou hybrides contact - sans contact parfaitement plan.

L'invention concerne donc un procédé de fabrication d'une carte à puce sans contact ou d'une carte à puce hybride contact - sans contact selon les revendications 1 et 7.

### Description brève des figures

Les buts, objets et caractéristiques ressortiront mieux à la lecture de la description qui suit faite en référence aux dessins joints dans lesquels :
La figure 1 représente le support d'antenne d'une carte à puce hybride contact - sans contact,
La figure 2 représente une coupe du support d'antenne représentée sur la figure 1, selon l'axe A-A de la figure 1,
La figure 3 représente une coupe du support d'antenne plastifié d'une carte à puce hybride contact - sans contact,
La figure 4 représente une coupe de la carte à puce hybride contact - sans contact selon l'invention,
La figure 5 représente le support d'antenne d'une carte à puce sans contact,
La figure 6 représente une coupe du support d'antenne représentée sur la figure 5, selon l'axe B-B de la figure 5,
La figure 7 représente une coupe du support d'antenne plastifié d'une carte à puce sans contact,
La figure 8 représente une coupe de la carte à puce sans contact selon l'invention.

### Description détaillée de l'invention

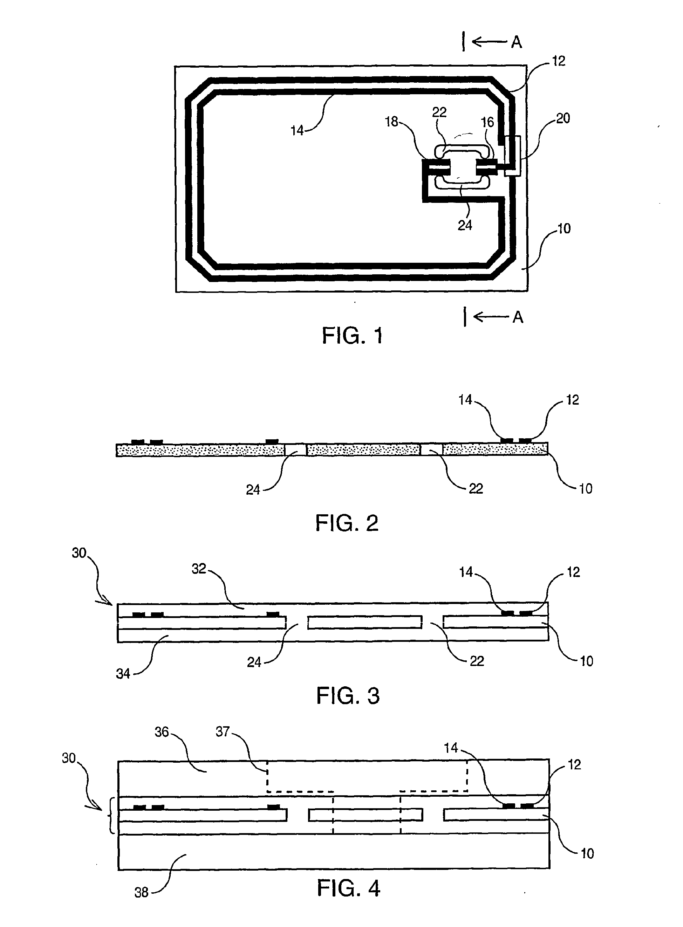

Selon un mode de réalisation préféré de l'invention illustré sur la figure 1, le support d'antenne est en matière fibreuse telle que du papier et a une épaisseur d'environ 90 µm. La fabrication de la carte à puce selon l'invention consiste tout d'abord à réaliser l'antenne sur son support 10. L'antenne est constituée de deux spires 12 et 14 d'encre conductrice polymère sérigraphiée, chargée en éléments conducteurs tels que l'argent, le cuivre ou le carbone. Chaque spire a une de ses extrémités reliée à un des plots de connexion de l'antenne également sérigraphiés, la spire 12 étant reliée au plot 16 et la spire 14 au plot 18. Les spires sont reliées entre elles par un pont électrique appelé plus communément cross-over (non représenté sur la figure). Une bande isolante 20 d'encre diélectrique est sérigraphiée entre le cross-over et la spire 12. Le module électronique contenant la puce est inséré dans la carte à la dernière étape de fabrication de la carte hybride contact - sans contact. Le dessin de l'antenne est inversé par rapport au dessin normal d'une antenne pour carte à puce au format ISO. Cette configuration particulière permet d'obtenir une carte à puce hybride contact - sans contact avec une cavité pour loger le module, fraisée dans le corps de carte qui est opposé à la face du support portant la sérigraphie, c'est à dire dans le corps de carte qui est en contact avec la face du support ne portant pas la sérigraphie conformément à la description détaillée du procédé de fabrication d'une carte à puce hybride contact - sans contact du brevet FR 2 801 707.

Ainsi, lorsque le support est renversé (plots de connexion à gauche), on constate que les plots de connexion 16 et 18 du module se retrouvent à l'emplacement normalisé pour les cartes au format ISO. Le support d'antenne en papier peut comporter des découpes ou des cavités 22 et 24 afin de renforcer la tenue du module.

Ainsi le support d'antenne 10 possède des découpes ou/et des cavités et des reliefs dus à l'antenne constituée de spires d'encre sérigraphiée. De ce fait, les deux faces du support d'antenne 10 ne sont pas planes et plus particulièrement la face sur laquelle est sérigraphiée l'antenne.

Les figures 2, 3 et 4 suivantes illustrent le procédé de fabrication d'une carte hybride contact - sans contact selon l'invention. Le support d'antenne 10 d'une carte à puce hybride est représenté en coupe sur la figure 2. La première étape du procédé selon l'invention consiste à laminer deux couches ou feuilles de thermoplastique sur le support d'antenne 10. Cette étape constitue la première phase de lamination des différentes couches constitutives de la carte et est illustrée en coupe sur la figure 3. Cette première étape de lamination consiste à souder par pressage à chaud de chaque côté du support d'antenne 10 deux feuilles de thermoplastique homogènes 32 et 34 d'épaisseur 100 µm. La température et la pression atteintes sont respectivement de l'ordre de 180°C et 250 bars. Lors de cette première étape de lamination, la température doit être suffisante pour que la matière composant les feuilles 32 et 34 se ramollisse et flue totalement de manière à remplir les évidements 22 et 24 et les éventuelles autres découpes effectuées dans le support 10 et à emprisonner les reliefs du support d'antenne tels que ceux dus aux spires 12 et 14. Ainsi, les reliefs du support d'antenne 10 sont emprisonnés dans la masse du thermoplastique formant ainsi un support d'antenne plastifié 30 d'épaisseur égale à environ 220 µm. Les éventuelles découpes effectuées préalablement sur le support d'antenne permettent en outre la soudure des deux feuilles de thermoplastique 32 et 34 entre elles. Le support d'antenne plastifié 30 ainsi formé fait disparaître toutes différences d'épaisseur du support d'antenne d'origine 10. La deuxième phase de lamination des différentes couches constitutives de la carte consiste à laminer deux corps de carte de chaque côté du support d'antenne plastifié 30 en référence à la figure 4. Cette seconde étape, réalisée après un certain temps correspondant au temps nécessaire pour que les feuilles de thermoplastiques 32 et 34 soient solidifiées, consiste à venir souder deux couches 36 et 38 de thermoplastique, d'épaisseur égale d'environ 260 µm, constituant les corps de carte sur les faces plastifiées et planes du support 30, par pressage à chaud. Les deux corps de carte 36 et 38 ont été préalablement imprimés, sur leur face extérieure, du graphisme personnalisé de la carte. Le support d'antenne plastifié 30 étant d'épaisseur constante, cette étape s'apparente davantage à un collage qu'à un soudage. De ce fait, la pression et la température nécessaires dans cette phase sont bien inférieures à celles utilisées dans un procédé traditionnel. Les températures et pressions nécessaires pour cette étape de lamination ne sont plus que de l'ordre respectivement de 120°C et 150 bars. De plus, la durée des cycles de mise en pression et en température est également diminuée.

Dans le cas d'une carte hybride contact - sans contact la dernière étape de fabrication de la carte, non représentée dans les figures, consiste à fraiser une cavité 37 qui reçoit le module constitué de la puce et du circuit double face. Le fraisage permet également de dégager les plots de connexion de l'antenne avec le module. Afin de ne pas endommager l'impression sérigraphique de l'antenne, le fraisage est réalisé dans le corps de carte qui est opposé à la face du support d'antenne portant l'impression sérigraphique, c'est à dire dans le corps de carte qui est en contact avec la face du support ne portant pas la sérigraphie de l'antenne. Ainsi, lors du fraisage, le support d'antenne est fraisé avant l'encre. De plus, celle-ci étant prise en masse dans le PVC de la couche interne du corps de carte, elle ne subit aucun dommage tel que des fissures ou dilacérations. Dans le cas de cartes à puce au format ISO pour lesquelles l'emplacement de la puce sur la carte est normalisé, l'impression sérigraphique inversée de l'antenne sur le support et le fraisage de la cavité dans le corps de carte qui est en contact avec la face du support ne portant pas la sérigraphie, permettent d'installer le module à l'emplacement normalisé, tout en préservant l'intégrité de l'antenne sérigraphiée.

L'installation du module se fait par collage. Deux colles différentes sont utilisées. La première colle est une colle conductrice qui permet de connecter le module aux plots de l'antenne. Cette colle est préférentiellement une colle contenant de l'argent. La deuxième colle utilisée est une colle qui scelle le module à la carte. Selon un mode de réalisation particulier, on utilise une colle cyanoacrylate. Il est également possible d'utiliser une colle « hot-melt » en film qui est placée sous le module avant son insertion dans la carte.

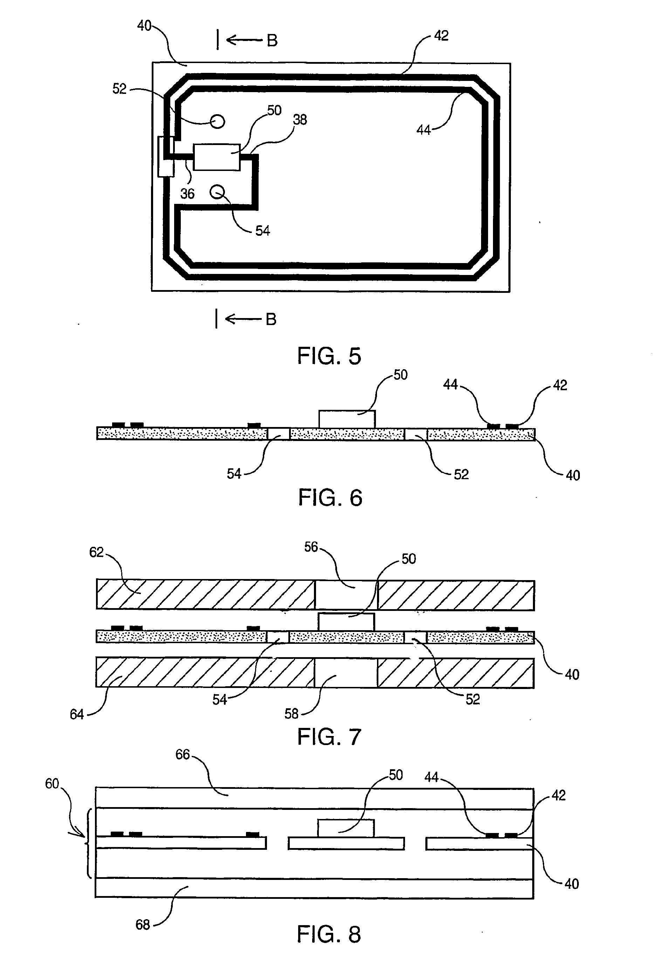

Lorsque l'invention est appliquée à une carte à puce sans contact, le support d'antenne 40 se présente de la façon illustrée sur la figure 5 et dans ce cas, le dessin de l'antenne n'est pas inversé. Comme précédemment, une antenne constituée de deux spires 42 et 44 d'encre sérigraphiée est réalisée sur le support 40. Contrairement aux cartes à puce hybride contact - sans contact, les cartes à puce sans contact ne possèdent pas un module électronique dont une face est visible à la surface de la carte mais un module électronique ou une puce 50 noyé dans la carte. Le module électronique ou la puce 50 est fixé sur le support d'antenne 40 et est directement connecté aux plots de connexion 36 et 38 de l'antenne grâce à une couche de colle conductrice permettant de réaliser les contacts ohmiques. Lorsqu'il s'agit d'un module électronique, celui-ci peut être placé dans un évidement du support 40 non montré sur la figure. La connexion ohmique peut se faire avec une colle conductrice ou sans colle par le simple contact. Le support d'antenne 40 peut comporter également deux évidements 52 et 54 qui sont élaborés de préférence après la sérigraphie de l'antenne. Ces deux évidements servent à renforcer la tenue mécanique du module électronique ou de la puce 50.

Ainsi le support d'antenne 40 possède des découpes ou/et des cavités et des reliefs dus à l'antenne constituée de spires d'encre sérigraphiée. De ce fait, les deux faces du support d'antenne 40 ne sont pas planes et plus particulièrement la face sur laquelle est sérigraphiée l'antenne. De plus, le support d'antenne 40 d'une carte à puce uniquement sans contact comporte un relief important dû au module électronique ou puce 50 comme illustré sur la figure 6 qui représente une coupe du support d'antenne 40 d'une carte à puce sans contact selon l'axe B-B de la figure 5.

Les étapes du procédé selon l'invention appliquées à une carte à puce sans contact sont similaires aux étapes du procédé appliqué à une carte à puce hybride contact-sans contact. Cependant, une variante du procédé selon l'invention s'applique au cas des cartes à puces sans contact munies d'un module électronique ou d'une puce 50 et s'applique avantageusement à une carte à puce sans contact munie d'une puce 50 connectée directement à l'antenne et est illustrée en détail sur les figures 6, 7 et 8.

Le support d'antenne 40 d'une carte à puce sans contact est représenté en coupe sur la figure 6. La première étape du procédé selon l'invention consiste à laminer deux couches ou feuilles de thermoplastique sur le support d'antenne 40. Cette étape constitue la première phase de lamination des différentes couches constitutives de la carte et est illustrée en coupe sur la figure 6. Cette première étape de lamination consiste à souder par pressage à chaud de chaque côté du support d'antenne 40 deux feuilles de thermoplastique homogènes 62 et 64. La température et la pression atteintes sont respectivement de l'ordre de 180°C et 250 bars. La feuille de thermoplastique 62 qui est appliquée sur la face du support d'antenne recevant le module électronique ou la puce 50 est perforée d'une cavité traversante 56 et son épaisseur est supérieure à l'épaisseur du module électronique ou de la puce 50. La cavité 56 est située sur la feuille de thermoplastique 62 de façon à ce que le module électronique ou la puce 50 soit à l'intérieur lorsque la feuille 62 est placée sur le support 40 avant la lamination et de façon à ce que le module électronique ou la puce 50 ne soit pas en contact avec la feuille 62. La cavité 56 est de préférence circulaire. Lorsqu'il s'agit d'une puce 50 directement connectée à l' antenne, une puce d'épaisseur 180 µm et de surface 1,5 mm2, l'épaisseur de la couche de thermoplastique 62 est égale à 200 µm et le diamètre de la cavité 56 est égal à 3 mm.

Ainsi, lors de la première étape de lamination, la pression s'exerce sur la feuille de thermoplastique 62 ou 64 et non sur la puce 50, de telle sorte que celle-ci ne subit aucune contrainte qui pourrait l'endommager. La température doit être suffisante pour que la matière composant les feuilles 62 et 64 se ramollisse et flue totalement de manière à remplir les évidements 52 et 54, et les éventuelles autres découpes effectuées dans le support 40, à remplir la cavité 56 et à emprisonner les reliefs du support d'antenne tels que ceux dus aux spires 42 et 44 de l'antenne.

Ainsi, les reliefs du support d'antenne 40 sont emprisonnés dans la masse du thermoplastique formant ainsi un support d'antenne plastifié 60 d'épaisseur égale à environ 400 µm. Les éventuelles découpes effectuées préalablement sur le support d'antenne permettent en outre une meilleure soudure des deux feuilles de thermoplastique 62 et 64 entre elles. Le support d'antenne plastifié 60 ainsi formé fait disparaître toutes différences d'épaisseur du support d'antenne d'origine 40.

La deuxième phase de lamination des différentes couches constitutives de la carte consiste à laminer deux corps de carte de chaque côté du support d'antenne plastifié 60 en référence à la figure 8. Cette seconde étape, réalisée après un certain temps correspondant au temps nécessaire pour que les feuilles de thermoplastiques 62 et 64 soient solidifiées, consiste à venir souder deux couches 66 et 68 de thermoplastique, d'épaisseur égale à environ 160 µm, constituant les corps de carte sur les faces plastifiées et planes du support 60, par pressage à chaud. Les deux corps de carte 66 et 68 ont été préalablement imprimés, sur leur face extérieure, du graphisme personnalisé de la carte. Le support d'antenne plastifié 60 étant d'épaisseur constante, cette étape s'apparente davantage à un collage qu'à un soudage. De ce fait, la pression et la température nécessaires dans cette phase sont bien inférieures à celles utilisées dans un procédé traditionnel. La température et la pression nécessaires pour cette étape de lamination ne sont plus que d'environ 120°C et 150 bars respectivement. De plus, la durée des cycles de mise en pression et en température est également diminuée.

Dans le cas d'une carte à puce sans contact comme représenté sur les figures 5, 6, 7 et 8, cette étape constitue la dernière étape de fabrication de la carte.

Selon une variante du procédé de l'invention appliquée à une carte à puce sans contact, la feuille de thermoplastique 64 qui est appliquée sur la face du support d'antenne opposée à celle recevant le module électronique ou la puce 50 peut également être perforée d'une cavité 58. La cavité 58 est située sur la feuille de thermoplastique 64 de façon à ce qu'elle se superpose à l'emplacement du module électronique ou de la puce 50. Dans ce cas, lors de la première étape de lamination, la puce est totalement préservée de toute contrainte due à la pression exercée sur les feuilles de thermoplastique 62 et 64.

Une seconde variante du procédé selon l'invention peut être appliquée à une carte à puce sans contact dans le cas où la cavité 56 est trop importante pour être remplie par la matière de la feuille de thermoplastique 62 lors de la première étape de lamination. Dans ce cas, le support d'antenne 60 obtenu après la première étape de lamination comporte un creux dû à la cavité 56 et donc n'est pas plan. Le support 60 peut donc recevoir à l'emplacement de la cavité 56, une résine du type époxy pour protéger le module électronique ou puce 50 et rendre le support d'antenne plastifié 60 parfaitement plan.

Le thermoplastique utilisé pour les couches constitutives des corps de carte est préférentiellement du polychlorure de vinyle (PVC), mais peut être aussi du polyester (PET, PETG), du polypropylène (PP), du polycarbonate (PC) ou de l'acrylonitrile-butadiène-styrène (ABS).

Il est important de préciser qu'une antenne constituée de spires métalliques sur un support en plastique tel que du polyester ou du polyamide ou sur un support en verre époxy est également en relief par rapport à son support. L'invention s'applique donc à tout type de support d'antenne et à tout type d'antenne, et en particulier aux supports dont l'antenne apparaît en relief. Le support d'antenne doit être constitué d'un matériau dont les dimensions restent stables quelle que soit la température et notamment un matériau supportant sans déformations ni altérations des températures de l'ordre de 180°C.

## Revendications

1. Procédé de fabrication d'une carte à puce sans contact comprenant un support d'antenne (40) et une puce (50) relié à l'antenne, ledit procédé comprenant une première étape de lamination consistant à souder de chaque côté dudit support d'antenne (40) une feuille de matière thermoplastique homogène (62, 64) par pressage à chaud à une température suffisante pour que la matière composant les feuilles se ramollisse et flue totalement de manière à faire disparaître toutes différences d'épaisseur du support d'antenne et à former un support d'antenne plastifié (60) à faces planes, et
ledit procédé étant **caractérisé en ce que**
ledit support d'antenne comportant des évidements traversants (52, 54) de part et d'autre de ladite puce, ladite première étape de lamination entraîne la soudure des deux couches de matière thermoplastique entre elles au travers desdits évidements de manière à renforcer la tenue mécanique de la puce, et
il comprend une seconde étape de lamination réalisée après un temps correspondant au temps nécessaire pour que lesdites feuilles de matière thermoplastique (62, 64) soient solidifiées, ladite deuxième étape consistant à souder par pressage à chaud à une température bien inférieure à la température de ladite première étape de lamination sur les faces plastifiées et planes dudit support d'antenne (60) d'épaisseur constante plastifié par lesdites feuilles de thermoplastiques deux couches en matière plastique (66, 68), constituant des corps de carte.

2. Procédé de fabrication selon la revendication 1 appliqué à une carte à puce sans contact, dans lequel ladite feuille de matière thermoplastique (62) qui est appliquée sur la face dudit support d'antenne (40) recevant le module électronique ou la puce (50) est perforée d'une cavité traversante (56) et son épaisseur est supérieure à l'épaisseur de la puce, ladite cavité (56) étant située de façon à ce que ledit module électronique ou la puce (50) soit à l'intérieur de la cavité lorsque ladite feuille (62) est placée sur ledit support (40) avant la première étape de lamination et de façon à ce que le module électronique ou la puce (50) ne soit pas en contact avec ladite feuille (62).

3. Procédé de fabrication d'une carte à puce selon la revendication 2, dans lequel ladite feuille de matière thermoplastique (64) qui est appliquée sur la face du support d'antenne opposée à celle recevant la puce est perforée d'une cavité (58), la cavité (58) étant située sur ladite feuille de matière thermoplastique (64) de façon à ce qu'elle se superpose à l'emplacement du module électronique ou de la puce (50).

4. Procédé de fabrication d'une carte à puce selon la revendication 2, dans lequel une résine du type époxy est mise à l'emplacement de la cavité (56) dudit support (60) pour protéger le module électronique ou la puce (50) et rendre le support d'antenne plastifié (60) parfaitement plan.

5. Procédé de fabrication d'une carte à puce selon l'une des revendications 1 à 4, dans lequel ledit support d'antenne (10 ou 40) est constitué d'un matériau dont les dimensions restent stables quelle que soit la température et notamment un matériau supportant sans déformations ni altérations des températures de l'ordre de 180°C.

6. Procédé de fabrication d'une carte à puce selon la revendication 5, dans lequel ledit support d'antenne est en matière plastique telle que du polyester ou du polyamide.

7. Procédé de fabrication d'une carte à puce hybride contact - sans contact comprenant un support d'antenne (10) et un module électronique relié à l'antenne, ledit procédé comprenant une première étape de lamination consistant à souder de chaque côté dudit support d'antenne (10) une feuille de matière thermoplastique homogène (62, 64) par pressage à chaud à une température suffisante pour que la matière composant les feuilles se ramollisse et flue totalement de manière à faire disparaître toutes différences d'épaisseur du support d'antenne et à former un support d'antenne plastifié (30) à faces planes, et
ledit procédé étant **caractérisé en ce que**
ledit support d'antenne comportant des évidements traversants (22, 24) de part et d'autre de l'endroit qui va recevoir ledit module électronique, ladite première étape de lamination entraîne la soudure des deux couches de matière thermoplastique entre elles au travers desdits évidements de manière à renforcer la tenue mécanique du module électronique, et
il comprend une seconde étape de lamination réalisée après un temps correspondant au temps nécessaire pour que lesdites feuilles de matière thermoplastique (32, 34) soient solidifiées, ladite deuxième étape consistant à souder par pressage à chaud à une température bien inférieure à la température de ladite première étape de lamination sur les faces plastifiées et planes dudit support d'antenne (30) d'épaisseur constante plastifié par lesdites feuilles de thermoplastiques deux couches en matière plastique (36, 38), constituant des corps de carte,
une dernière étape qui consiste à insérer le module dans la carte.

8. Procédé de fabrication d'une carte à puce selon la revendication 5, dans lequel ledit support d'antenne est en verre époxy.

9. Procédé de fabrication d'une carte à puce selon la revendication 5, dans lequel ledit support d'antenne (10 ou 40) est en matière fibreuse telle que du papier.

10. Procédé de fabrication d'une carte à puce selon la revendication 9, dans lequel l'étape de fabrication de l'antenne consiste à sérigraphier des spires d'encre polymère conductrice sur ledit support en matière fibreuse et à faire subir un traitement thermique audit support afin de cuire ladite encre.

11. Procédé de fabrication d'une carte à puce selon l'une des revendications 1 à 10, dans lequel lesdits corps de carte (36, 38 ou 66, 68) laminés de chaque côté dudit support d'antenne plastifié (50 ou 60) sont pré-imprimés du graphisme personnalisé de la carte.

12. Procédé de fabrication d'une carte à puce selon l'une des revendication 1 à 11, dans lequel durant l'étape de lamination des corps de carte sur ledit support d'antenne plastifié (50 ou 60), une troisième feuille en matière plastique ou une couche de vernis est ajouté sur chaque corps de carte, jouant le rôle de couverture.

13. Procédé de fabrication d'une carte à puce selon l'une des revendications 1 à 12, **caractérisé en ce que** la matière thermoplastique constituant les corps de carte est du polychlorure de vinyle (PVC), du polyester (PET, PETG), du polyprolpylène (PP), du polycarbonate (PC) ou de l'acrylonitrile-butadiène-styrène (ABS).

## Claims

1. A method for manufacturing a contactless smart card comprising an antenna support (40) and a chip (50) connected to the antenna, said method comprising a first lamination step consisting in welding on each side of said antenna support (40) an homogeneous thermoplastic sheet (62, 64) by hot press molding at a sufficient temperature to cause the material that makes up the sheets to soften and fully creep so as to remove any thickness variations in the antenna support and to form a plastic-covered antenna support (60) with flat surfaces, and
said method being **characterized in that**
given that said antenna support features through-openings (52, 54) on each side of said chip, said first lamination step causes the two layers of plastic material to be welded together through the openings so as to reinforce the mechanical strength of the chip, and
it includes a second lamination step carried out after said thermoplastic sheets (62, 64) have hardened, said second step consisting in welding by hot press molding, at a temperature that is largely below the temperature of said first lamination step, onto the flat and plastic-covered surfaces of said antenna support (60) of constant thickness and laminated by said thermoplastic sheets, two layers of plastic material (66, 68) forming card bodies.

2. The manufacturing method according to claim 1 applied to a contactless smart card, wherein said thermoplastic sheet (62) which is applied onto the surface of said antenna support (40) that receives the electronics module or the chip (50) is provided with a through-cavity (56) and its thickness is greater than the thickness of the chip, said cavity (56) being located so that said electronics module or the chip (50) is inside the cavity when said sheet (62) is placed onto said support (40) before the first lamination step and so that the electronics module or the chip (50) is not in contact with said sheet (62).

3. The method for manufacturing a smart card according to claim 2, wherein said thermoplastic sheet (64) which is applied to the surface of the antenna support opposite the surface that receives the chip is provided with a cavity (58), the cavity (58) being located on said thermoplastic sheet (64) so that it is superimposed onto the location of the electronics module or the chip (50).

4. The method for manufacturing a smart card according to claim 2, wherein an epoxy type resin is placed at the location of the cavity (56) of said support (60) in order to protect the electronics module or the chip (50) and render the plastic-covered antenna support (60) perfectly flat.

5. The method for manufacturing a smart card according to any of claims 1 through 4, wherein said antenna support (10 or 40) is made of a material whose dimensions remain stable irrespective of the temperature, and particularly a material that withstands temperatures in the order of 180 °C without being deformed or altered.

6. The method for manufacturing a smart card according to claim 5, wherein said antenna support is made of a plastic material such as polyester or polyamide.

7. A method for manufacturing a hybrid contact - contactless smart card comprising an antenna support (10) and an electronics module connected to the antenna, said method comprising a first lamination step consisting in welding on each side of said antenna support (10) an homogeneous thermoplastic sheet (62, 64) by hot press molding at a sufficient temperature to cause the material that makes up the sheets to soften and fully creep so as to remove any thickness variations in the antenna support and to form a plastic-covered antenna support (30) with flat surfaces, and
said method being **characterized in that**
given that said antenna support features through-openings (22, 24) on each side of the location that is to receive said electronics module, said first lamination step results in the welding of the two layers of thermoplastic material with each other through said openings so as to reinforce the mechanical strength of the electronics module, and
it includes a second lamination step carried out after said thermoplastic sheets (32, 34) have hardened, said second step consisting in welding by hot press molding, at a temperature that is largely below the temperature of said first lamination step, onto the flat and plastic-covered surfaces of said constant thickness antenna support (30) covered by said thermoplastic sheets, two layers of plastic material (36, 38) forming card bodies,
and a last step which consists in inserting the module into the card.

8. The method for manufacturing a smart card according to claim 5, wherein said antenna support is made of glass-reinforced epoxy.

9. The method for manufacturing a smart card according to claim 5, wherein said antenna support (10 or 40) is made of a fibrous material such as paper.

10. The method for manufacturing a smart card according to claim 9, wherein the manufacturing step of the antenna consists in screen printing turns of electrically conductive polymer ink on said support made of fibrous material and to subject said support to a heat treatment in order to bake said ink.

11. The method for manufacturing a smart card according to any of claims 1 through 10, wherein said card bodies (36, 38 or 66, 68) laminated on each side of said plastic-covered antenna support (50 or 60) are pre-printed with the customized graphics of the card.

12. The method for manufacturing a smart card according to any of claims 1 through 11, wherein, during the step consisting in laminating card bodies onto said plastic-covered antenna support (50 or 60), a third sheet made of plastic material or a coating of lacquer is added onto each card body to act as a cover.

13. The method for manufacturing a smart card according to any of claims 1 through 12, **characterized in that** the thermoplastic material from which the card bodies are made is polyvinyl chloride (PVC), polyester (PET, PETG), polypropylene (PP), polycarbonate (PC) or acrylonitrile-butadiene-styrene (ABS).

## Patentansprüche

1. Verfahren zum Herstellen einer kontaktlosen Chipkarte, die einen Antennenträger (40) und einen mit der Antenne verbundenen Chip (50) enthält, wobei das Verfahren einen ersten Laminierungsschritt enthält, der darin besteht, auf jede Seite des Antennenträgers (40) eine Folie (62, 64) aus homogenem thermoplastischem Material durch Warmpressen bei einer Temperatur, die ausreicht, damit das die Folien bildende Material vollständig erweicht und fließt, aufzuschweißen, derart, dass sämtliche Dickenunterschiede des Antennenträgers verschwinden und ein weichgemachter Antennenträger (60) mit ebenen Flächen gebildet wird, und
wobei das Verfahren **dadurch gekennzeichnet ist, dass**
dann, wenn der Antennenträger beiderseits des Chips durchgängige Aussparungen (52, 54) aufweist, der erste Laminierungsschritt das Verschweißen der zwei Schichten aus thermoplastischem Material miteinander durch die Aussparungen hindurch zur Folge hat, derart, dass die mechanische Festigkeit des Chips verstärkt wird, und
es einen zweiten Laminierungsschritt enthält, der nach einer Zeit ausgeführt wird, die der Zeit entspricht, die notwendig ist, damit die Folien (62, 64) aus thermoplastischem Material aushärten, wobei der zweite Schritt darin besteht, durch Warmpressen bei einer Temperatur, die ausreichend weit unterhalb der Temperatur des ersten Laminierungsschrittes ist, auf die weichgemachten und ebenen Flächen des durch die thermoplastischen Folien weichgemachten Antennenträgers (60) mit konstanter Dicke zwei Schichten aus Kunststoff (66, 68) aufzuschweißen, die Kartenkörper bilden.

2. Herstellungsverfahren nach Anspruch 1, das auf eine kontaktlose Chipkarte angewendet wird, wobei die Folie (62) aus thermoplastischem Material, die auf die Fläche des Antennenträgers (40) aufgebracht wird, die das elektronische Modul oder den Chip (50) aufnimmt, mit einem Durchgangshohlraum (56) durchlocht wird, dessen Dicke größer als die Dicke des Chips ist, wobei der Hohlraum (56) in der Weise angeordnet ist, dass sich das elektronische Modul oder der Chip (50) innerhalb des Hohlraums befindet, wenn die Folie (62) vor dem ersten Laminierungsschritt auf dem Träger (40) angeordnet wird, derart, dass das elektronische Modul oder der Chip (50) nicht mit der Folie (62) in Kontakt ist.

3. Verfahren zum Herstellen einer Chipkarte nach Anspruch 2, wobei die Folie aus thermoplastischem Material (64), die auf die Fläche des Antennenträgers gegenüber jener aufgebracht wird, die den Chip aufnimmt, mit einem Hohlraum (58) durchlocht ist, wobei der Hohlraum (58) in der Folie (64) aus thermoplastischem Material an einem Ort angeordnet ist, der über dem Ort des elektronischen Moduls oder des Chips (50) liegt ist.

4. Verfahren zum Herstellen einer Chipkarte nach Anspruch 2, wobei auf den Ort des Hohlraums (56) des Trägers (60) ein Harz des Epoxidtyps aufgebracht wird, um das elektronische Modul oder den Chip (50) zu schützen und um den weichgemachten Antennenträger (60) vollkommen eben zu machen.

5. Verfahren zum Herstellen einer Chipkarte nach einem der Ansprüche 1 bis 4, wobei der Antennenträger (10 oder 40) aus einem Material gebildet ist, dessen Abmessungen unabhängig von der Temperatur stabil bleiben, und insbesondere aus einem Material gebildet ist, das ohne Verformungen oder Veränderungen Temperaturen in der Größenordnung von 180 °C aushält.

6. Verfahren zum Herstellen einer Chipkarte nach Anspruch 5, wobei der Antennenträger aus Kunststoff wie etwa Polyester oder Polyamid besteht.

7. Verfahren zum Herstellen einer Hybrid-Chipkarte mit und ohne Kontakt, die einen Antennenträger (10) und ein mit der Antenne verbundenes elektronisches Modul enthält, wobei das Verfahren einen ersten Laminierungsschritt aufweist, der darin besteht, auf jede Seite des Antennenträgers (10) eine Folie (62, 64) aus homogenem thermoplastischem Material durch Warmpressen bei einer Temperatur, die ausreicht, damit das die Folien bildende Material vollständig erweicht und fließt, aufzuschweißen, derart, dass alle Dickenunterschiede des Antennenträgers verschwinden und ein weichgemachter Antennenträger (30) mit ebenen Flächen gebildet wird, und
wobei das Verfahren **dadurch gekennzeichnet ist, dass**
dann, wenn der Antennenträger durchgängige Aussparungen (22, 24) beiderseits des Ortes, der das elektronische Modul aufnimmt, aufweist, der erste Laminierungsschritt das Verschweißen der zwei Schichten aus thermoplastischem Material miteinander durch die Aussparungen hindurch zur Folge hat, derart, dass die mechanische Festigkeit des elektronischen Moduls erhöht wird, und
es einen zweiten Laminierungsschritt aufweist, der nach einer Zeit ausgeführt wird, die der Zeit entspricht, die notwendig ist, damit die Folien (32, 34) aus thermoplastischem Material aushärten, wobei der zweite Schritt darin besteht, durch Warmpressen bei einer Temperatur, die ausreichend weit unterhalb der Temperatur des ersten Laminierungsschrittes liegt, auf die weichgemachten und ebenen Flächen des durch die thermoplastischen Folien weichgemachten Antennenträgers (30) mit konstanter Dicke zwei Schichten aus Kunststoff (36, 38) aufzuschweißen, die Kartenkörper bilden,
und es einen letzten Schritt aufweist, der darin besteht, das Modul in die Karte einzusetzen.

8. Verfahren zum Herstellen einer Chipkarte nach Anspruch 5, wobei der Antennenträger aus Epoxidglas besteht.

9. Verfahren zum Herstellen einer Chipkarte nach Anspruch 5, wobei der Antennenträger (10 oder 40) aus Fasermaterial wie etwa Papier besteht.

10. Verfahren zum Herstellen einer Chipkarte nach Anspruch 9, wobei der Schritt des Herstellens der Antenne darin besteht, Windungen aus leitender Polymertinte auf den Träger aus Fasermaterial durch Siebdruck aufzubringen und den Träger einer Wärmebehandlung zu unterwerfen, um die Tinte einzubrennen.

11. Verfahren zum Herstellen einer Chipkarte nach einem der Ansprüche 1 bis 10, wobei die Kartenkörper (36, 38 oder 66, 68), die auf jede Seite des weichgemachten Antennenträgers (50 oder 60) laminiert werden, im Voraus mit einer personalisierten Gestaltung der Karte bedruckt werden.

12. Verfahren zum Herstellen einer Chipkarte nach einem der Ansprüche 1 bis 11, wobei während des Laminierungsschrittes der Kartenkörper auf den weichgemachten Antennenträger (50 oder 60) eine dritte Folie aus Kunststoff oder eine Lackschicht, die die Rolle eines Überzugs spielt, zu jedem Kartenkörper hinzugefügt wird.

13. Verfahren zum Herstellen einer Chipkarte nach einem der Ansprüche 1 bis 12, **dadurch gekennzeichnet, dass** das thermoplastische Material, das die Kartenkörper bildet, Polyvinylchlorid (PVC), Polyester (PET, PETG), Polypropylen (PP), Polycarbonat (PC) oder Acrylnitril-Butadien-Styrol (ABS) ist.
